**Europäisches Patentamt**

**European Patent Office**

**Office européen des brevets**

(19)

(11) Veröffentlichungsnummer : **0 453 448 B1**

(12) **EUROPÄISCHE PATENTSCHRIFT**

(45) Veröffentlichungstag der Patentschrift :
24.03.93 Patentblatt 93/12

(21) Anmeldenummer : 90900178.6

(22) Anmeldetag : 05.01.90

(86) Internationale Anmeldenummer :
PCT/EP90/00023

(87) Internationale Veröffentlichungsnummer :
WO 90/07967 26.07.90 Gazette 90/17

(51) Int. Cl.⁵ : **B01D 19/04**

(54) **ANTISCHAUMMITTEL UND IHRE VERWENDUNG.**

(30) Priorität : **14.01.89 DE 3901045**

(43) Veröffentlichungstag der Anmeldung :
**30.10.91 Patentblatt 91/44**

(45) Bekanntmachung des Hinweises auf die
Patenterteilung :
**24.03.93 Patentblatt 93/12**

(84) Benannte Vertragsstaaten :
**AT BE CH DE ES FR GB LI NL SE**

(56) Entgegenhaltungen :
**CH-A- 610 209**
**FR-A- 1 557 086**
**FR-A- 2 103 370**
**Chemical Abstracts, vol. 102, No. 3, January
1985 (Columbus, Ohio, US), see page 544,
abstract 22792m, & CS, A, 205942 (JAROSLAV
LIST et al.) 2 May 1984**

(73) Patentinhaber : **Henkel
Kommanditgesellschaft auf Aktien
Postfach 1100 Henkelstrasse 67
W-4000 Düsseldorf-Holthausen (DE)**

(72) Erfinder : **GEKE, Jürgen
Stoffeler Damm 108
W-4000 Düsseldorf 1 (DE)**
Erfinder : **MARGEIT, Ragnar
Uhlandstrasse 14
W-4100 Duisburg 14 (DE)**
Erfinder : **REHM, Hans-Jörgen
Haydnstrasse 6
W-4010 Hilden (DE)**

Jouve, 18, rue Saint-Denis, 75001 PARIS

## Beschreibung

Die vorliegende Erfindung betrifft Antischaummittel auf Basis einer Tensidmischung aus Fettsäurealkylenoxidaddukten und Ethylenoxid-Propylenoxid-Blockpolymeren, die - im Gegensatz zu den meisten zur Zeit auf dem Markt befindlichen Handelsprodukten auf Kohlenwasserstoffbasis - biologisch abbaubar ist.

Darüber hinaus betrifft die vorliegende Erfindung die Verwendung dieser Mittel in der lackverarbeitenden und farbenverarbeitenden Industrie, insbesondere bei der Lackierung von Kraftfahrzeugen, zur Schauminhibierung im Umlaufwasser von Naßabscheidern für Spritzlackieranlagen, welches zum Auffangen und Koagulieren des sogenannten Lackoversprays dient.

Aus der DE-A-36 36 086 sind Fettsäureester von Polyglycerinpolyglykolethern bekannt, die dadurch erhältlich sind, daß man Polyglycerine in an sich bekannter Weise mit Ethylenoxid und Propylenoxid umsetzt und das erhaltene Alkylenoxid-Anlagerungsprodukt mit Fettsäure verestert, wobei 2 bis 15 mol Ethylenoxid, 10 bis 60 mol Propylenoxid und 1 bis 3 mol Fettsäure pro mol im Polyglycerin vorhandener Hydroxylgruppen eingesetzt wird, die als solche oder in Form ihrer Zubereitungen als hochwirksame Entschäumer in zahlreichen Einsatzgebieten verwendet werden, insbesondere in der Nahrungsmittelindustrie und in der chemischen Verfahrenstechnik. Weitere Einsatzgebiete sind industrielle Reiniger und Reinigungsverfahren.

Das US-A-4 090 001 betrifft wäßrige basische Koagulationsmittel, insbesondere für das Spritzverfahren bei der Lackierung von Kraftfahrzeugen, die als Wirkstoffe eine wirksame Menge (1 bis 3 g/l) eines Fettalkohol-Ethylenoxid-Propylenoxid-Addukts enthalten, welches zugleich entschäumend wirkt.

Neben diesen Produkten auf fettchemischer Basis bestehen die meisten handelsüblichen Entschäumer in ihrem Hauptbestandteil aus Kohlenwasserstoffen oder aus Siliconen, welche biologisch nicht abbaubar sind und somit die Umwelt erheblich belasten.

In den lackverarbeitenden Industrien ist die Koagulation der bei der Entsorgung der Auftragssysteme (Lacke, Unterbodenschutzmittel, Wachse usw.) anfallenden Rückstände ein sehr bedeutender Arbeitsschritt zur Aufrechterhaltung der Funktionsfähigkeit des gesamten Lackiersystems und der entsprechenden Prozeßführung.

Nahezu gleichrangig mit der Bedeutung von Koagulierungsmitteln sind Antischaummittel. Dies gilt ganz besonders für die aktuelle Problematik in Lackiersystemen und ihren Entsorgungssystemen. Die modernen Lacke und Prozeßtechnologien machen die Verwendung von Antischaummitteln praktisch zwingend erforderlich. Schaum in Lackiersystemen und Entsorgungssystemen behindert bzw. verhindert meist die Denaturierung des "Lackoversprays". Gleichzeitig hiermit wird die Lacknebelabsaugung empfindlich gestört. Im Extremfall ist die Funktionsfähigkeit der gesamten Anlage gestört, was letztlich zu einem Produktionsstillstand führt.

Eine Übersicht über derartige Problematiken gibt der Artikel von Jürgen Geke in "Oberfläche + JOT", 1986, Heft 11, Seiten 43 bis 46.

Der vorliegenden Erfindung liegt die Aufgabe zugrunde, ein neuartiges Antischaummittel auf Basis einer Mischung von nichtionischen Tensidkomponenten bereitzustellen.

Dieses neuartige Antischaummittel soll einerseits einfach herstellbar sein, keine Kohlenwasserstoffanteile oder Siliconanteile mehr besitzen, also biologisch abbaubar sein, bessere anti-schäumende Wirkungen zeigen als gängige Marktprodukte und schließlich eine überraschend bessere synergistische Wirkung als Antischaummittel zeigen als die beiden Einzeltensidkomponenten, aus denen dieses erfindungsgemäße Mittel erhalten werden soll.

Die vorliegende Erfindung betrifft somit ein Antischaummittel, enthaltend

A 33 bis 89 Gew.-%

eines oder mehrerer Fettsäurealkylenoxidaddukte der allgemeinen Formel (I)

$$R^1\text{-}COO(A)_n\text{-}H \qquad (I)$$

wobei

$R^1$ eine lineare oder verzweigte Alkylgruppe oder Alkenylgruppe mit 15 bis 21 C-Atomen ist,

$A = (CH_2\text{-}CH_2O)$ oder $(CH(CH_3)CH_2O)$ und/oder $(CH_2CH(CH_3)O)$ ist und

$n$ eine Zahl von 1 bis 5 ist,

und

B 67 bis 11 Gew.-%

eines Blockpolymeren des Propylenoxids und Ethylenoxids, welches folgende physikalische Kenndaten aufweist:

- Trübungspunkt (10 %ige wäßrige Lösung): 9 °C bis 13 °C
- HLB-Wert: etwa 1,0
- durchschnittliches Molekulargewicht: ca. 3 800 g/mol
- Viskosität (nach Brookfield; 25 °C): ca. 800 mPas.

Die erfindungsgemäßen Antischaummittel enthalten somit die Komponenten A und B in einem Gewichtsverhältnis von A zu B im Bereich von 8 : 1 bis 0,5 : 1.

Gemäß einer bevorzugten Ausführungsform der vorliegenden Erfindung enthalten die Antischaummittel 60 bis 80 Gew.-% der Komponente A und 40 bis 20 Gew.-% der Komponente B. Dies entspricht einem Gewichtsverhältnis der Komponenten A zu B im Bereich von 4 : 1 bis 1,5 : 1. In dem genannten Bereich zeigen die erfindungsgemäßen Antischaummittel sowohl eine ausgezeichnete schauminhibierende Wirksamkeit als auch eine sehr gute biologische Abbaubarkeit. Erfindungsgemäß ist in diesem Bereich ein Gewichtsverhältnis von A : B = 2 : 1 besonders bevorzugt.

Gemäß einer weiteren Ausführungform der vorliegenden Erfindung enthalten die Antischaummittel 44 bis weniger als 60 Gew.-% der Komponente A und 56 bis mehr als 40 Gew.-% der Komponente B. Dies entspricht einem Gewiehtsverhältnis der Komponenten A zu B im Bereich von kleiner als 1,5 : 1 bis 0,8 : 1. Erfindungsgemäß ist in diesem Bereich ein Gewichtsverhältnis von A : B = 1 : 1 besonders bevorzugt. In diesem Bereich zeigen die Antischaummittel gleichfalls eine ausgezeichnete schauminhibierende Wirksamkeit sowie eine zufriedenstellende biologische Abbaubarkeit. Die biologische Abbaubarkeit steht jedoch hinter derjenigen von Antischaummitteln des erstgenannten Bereiches zurück. Wird daher in einem bestimmten Anwendungsfall der biologischen Abbaubarkeit eine besondere Bedeutung beigemessen, so empfiehlt sich der Einsatz eines erfindungsgemäßen Antischaummittels, in welchem die Komponenten A und B ein Gewichtsverhältnis im erstgenannten Bereich von A zu B wie 4 : 1 bis 1,5 : 1 aufweisen.

Als Komponente A kommen in den erfindungsgemäßen Antischaummitteln Addukte von Fettsäuren mit 1 bis 5 mol Ethylenoxid oder Propylenoxid in Betracht. Bei den Fettsäuren handelt es sich um solche mit linearen oder verzweigten Alkylgruppen oder Alkenylgruppen mit 15 bis 21 C-Atomen im Alk(en)ylteil. Diese Fettsäuren werden entweder synthetisch erhalten oder als Fettsäuremischung aus den entsprechenden Glyceriden nativer Öle und Fette isoliert.

Repräsentative Vertreter dieser Fettsäuren sind Palmitinsäure, Heptadecansäure, Stearinsäure, Nonadecansäure, Arachinsäure, Heneicosansäure und Behensäure sowie die ungesättigten Fettsäuren Palmitoleinsäure, Ölsäure, Gadoleinsäure und Erucasäure sowie die entsprechenden verzweigten Isomere der vorstehend beschriebenen gesättigten und ungesättigten Fettsäuren.

Als bevorzugte Komponente A in den erfindungsgemäßen Antischaummitteln wird das Addukt von synthetisch reiner oder technischer Ölsäure mit 0,5 bis 2 mol Propylenoxid, insbesondere mit 1 mol Propylenoxid, verwendet.

Als Komponente B in den erfindungsgemäßen Antischaummitteln wird ein schaumarmes, nichtionisches Tensid verwendet, welches durch Copolymerisation von Propylenoxid und Ethylenoxid gewonnen wird. Bei diesem Blockpolymerisat bildet das Polypropylenoxid den zentralen Molekülteil an dem rechts und links Polyethylenoxidmoleküle befestigt sind.

Derartige nichtionische Tenside werden von der Fa. Imperial Chemical Industries, Großbritannien, unter der Bezeichnung "Synperonic PE/L 101" vertrieben und weisen folgende Kenndaten auf:
- Trübungspunkt (10 %ige wäßrige Lösung): 9 °C bis 13 °C
- HLB-Wert: etwa 1,0
- durchschnittliches Molekulargewicht: ca. 3 800 g/mol
- Viskosität (Brookfield-Viskosimeter bei 25 °C): ca. 800 mPas
- Aussehen: klare Flüssigkeit
- pH-Wert (2,5 %ige wäßrige Lösung): 5,0 bis 7,5
- Dichte bei 25 °C: 1,02 g/ml
- unlöslich in Wasser, Kerosin und Ethylenglykol
- löslich in Ethanol und Toluol.

Je nach Anwendungszweck der erfindungsgemäßen Antischaummittel können diese gegebenenfalls noch Hilfsstoffe und/oder Zusatzstoffe enthalten, beispielsweise Emulgatoren oder zusätzliche schauminhibierende bzw. schaumzerstörende Stoffe.

Als Emulgatoren kommen insbesondere in Betracht:
- Ethylendiamin-ethylenoxid/propylenoxid-kondensationsprodukte mit einem Molekulargewicht von etwa 3 700;
- Glycerinfettsäureester von $C_{12-20}$-Fettsäuren mit Verseifungszahlen von 165 bis 175, Jodzahlen von 70 bis 80, Hydroxylzahlen von 175 bis 200 und Viskositäten im Bereich von 160 bis 230 mPa.s (30 °C), beispielsweise das Handelsprodukt Rilanit[R] GMO, Fa. Henkel KGaA, Deutschland;
- Fettsäureester von $C_{12-20}$-Fettsäuren mit $C_{3-18}$-Alkanolen;
- Polyole, vorzugsweise Glycerin oder Polyglycerine mit Molekulargewichten bis 5 000;
- Gemische von Fettsäureestern, Polyolen und nativen Ölen, beispielsweise das Handelsprodukt Bevaloid[R] 6695, Fa. Bevaloid, Großbritannien.

Als zusätzliche schauminhibierende bzw. schaumzerstörende Stoffe kommen insbesondere Kieselsäuren in Frage, beispielsweise Aerosile[R], Fa. DEGUSSA, Deutschland.

Die erfindungsgemäßen Antischaummittel enthalten derartige Hilfs- und/oder Zusatzstoffe in Mengen von 1 bis 10 Gew.-%, bezogen auf die Gesamtformulierung.

Die vorliegende Erfindung betrifft weiterhin die Verwendung der oben beschriebenen Antischaummittel in der lackverarbeitenden und farbenverarbeitenden Industrie, insbesondere bei der Lackierung von Kraftfahrzeugen, zur Schauminhibierung im Umlaufwasser von Naßabscheidern für Spritzlackieranlagen, welches zum Auffangen und Koagulieren des sogenannten Lackoversprays dient.

Hierbei werden die erfindungsgemäßen Antischaummittel vorzugsweise zusammen mit den üblichen Lackkoagulierungsmitteln eingesetzt, wie sie beispielsweise in der DE-A-34 12 763 oder in der DE-A-38 10 166.1 (unveröffentlicht) beschrieben sind.

Insbesondere kann man die erfindungsgemäßen Antischaummittel dann mit Vorteil verwenden, wenn man sie dem Umlaufwasser in Naßabscheidern von Spritzlackieranlagen bei einer kontinuierlichen Dosierweise in Mengen von 1 bis 20 ml pro m³ Badvolumen und Stunde Betriebszeit und bei diskontinuierlicher Betriebsweise in Mengen von 5 bis 50 ml pro m³ Badvolumen und Stunde Betriebszeit zufügt.

Die Dosierung der erfindungsgemäßen Antischaummittel kann sowohl als Konzentrat als auch in verdünnter wäßriger Lösung erfolgen. Dies stellt einen weiteren Vorteil gegenüber dem Stand der Technik dar, da die erfindungsgemäßen Antischaummittel mit Wasser in jedem beliebigen Verhältnis verdünnbar sind. Erfolgt die Dosierung in verdünnter Form, ist eine entsprechend höhere Dosierung vorzunehmen, die im allgemeinen empirisch auf den optimalen Wert - bezogen auf die jeweiligen Verhältnisse - einzustellen ist.

Die vorliegende Erfindung wird im folgenden anhand von Beispielen weiter erläutert.

Anwendungstechnische Prüfung

Die Schaumprüfung wurde wie folgt durchgeführt:

Die schauminhibierende Wirksamkeit der erfindungsgemäßen Antischaummittel im Vergleich zu der entschäumenden Wirkung der Einzelkomponenten und im Vergleich zu derjenigen eines Marktproduktes auf Kohlenwasserstoff-Basis wurde unter Praxisbedingungen an zwei ausgewählten Lacken getestet.

a) Versuchsbedingungen:

Die verwendete Testapparatur bestand aus einem senkrecht stehenden 2 1-Meßzylinder, welcher am unteren Ende einen Auslaufstutzen aufwies. Von diesem Auslaufstutzen führte eine Schlauchverbindung zu einer Pumpe (Kreiselpumpe der Fa. Eheim, Deutschland, Leistung: 20 l/min); eine weitere Schlauchverbindung führte von dieser Pumpe zum oberen Rand des Meßzylinders.

In diesem Meßzylinder wurden 1 400 ml einer wäßrigen Lösung eingefüllt, die die folgenden Zusätze enthielt:

Zusatz a:     Testlack,
Zusatz b:     Koagulierungsmittel,
Zusatz c:     Antischaummittel.

Die Zusätze a und b wurden mittels eines Ultra-Turaxmischers (Typ T25, Fa. Jahnke & Kunkel, Deutschland) bei 8 000 UpM 1 min lang vermischt. Anschließend wurde Zusatz c hinzugefügt, die Lösung 1 min mittels Reihenrührgerät (Typ RW20DZM, Fa. Jahnke & Kunkel, Deutschland) bei 500 UpM durchmischt und in die Testapparatur gegeben.

Mit Hilfe der vorstehend beschriebenen Testapparatur war ein Umpumpen des Meßzylinder-Inhalts von unten nach oben gewährleistet, wobei - je nach Zusatz - eine mehr oder weniger starke Schaumentwicklung resultierte. Das Umpumpen wurde jeweils solange durchgeführt, bis das anfänglich vorhandene Leervolumen des Meßzylinders - bis zu dessen 2 000 ml Marke - mit Schaum angefüllt war.

Zur Beurteilung der schauminhibierenden Wirksamkeit des jeweils geprüften Antischaummittels dient nur die Laufzeit der Pumpe, die erforderlich ist, um den Meßzylinder mit Schaum zu füllen. Je länger die Laufzeit der Pumpe ist, um den Schaum bis zur 2 000 ml Marke des Meßzylinders ansteigen zu lassen, desto besser ist die schauminhibierende Wirksamkeit des jeweils geprüften Antischaummittels. Somit ist die Laufzeit der Pumpe eine direkte Maßzahl für das primäre Kriterium des jeweiligen Antischaummittels, dessen schauminhibierende Wirksamkeit.

Ein sekundäres Kriterium zur Beurteilung der Wirksamkeit des jeweiligen Antischaummittels ist das Verhalten des gebildeten Schaumes, d.h. der Schaumzerfall. Hierzu wurde nach Abschalten der Pumpe jeweils nach bestimmten Zeiten die restliche Schaumhöhe in ml (Differenz zwischen Füllhöhe der Testlösung und Schaumhöhe) ermittelt.

b) Testsubstanzen:

Zu den in der vorstehenden Art und Weise beschriebenen Schaumprüfungen wurden die folgenden Substanzen eingesetzt:

Zusatz a: Testlacke

Testlack a1)   Hydro-Basislack, platin, L 1120 223, Fa. BASF AG, Deutschland (Tabelle I)
Testlack a2)   Spezial-Wasserfüller, grau, FQ 88-6000, Fa. BASF AG, Deutschland (Tabelle II)
Dosierung der Testlacke jeweils 10 g/l.

Zusatz b: Koagulierungsmittel

P3R-croni 821, Fa. Henkel KGaA, Deutschland (gemäß DE-A-34 12 763).
Dosierung des Koagulierungsmittels jeweils 10 g/l.

Zusatz c: Antischaummittel

Dosierung der Antischaummittel jeweils 0,07 g/l.

Vergleichsbeispiele (c1 bis c4)

c1:   ohne Zusatz eines Antischaummittels (Blindwert)
c2:   Ölsäure + 1 mol PO (Komponente A alleine)
c3:   EO/PO-Blockpolymer (Komponente B alleine)
c4:   NalcoR 71D5 (Fa. Nalco Chemical Comp., USA), handelsüblicher Entschäumer auf Kohlenwasserstoff-
      Basis

Erfindungsgemäße Beispiele (c5 bis c11)

Hierzu wurden die nachstehend definierten Komponenten A und B in jeweils unterschiedlichen Gewichtsverhältnissen eingesetzt:
Komponente A: Ölsäure + 1 mol PO
Komponente B: EO/PO-Blockpolymer
c5:    A : B = 8 : 1
c6:    A : B = 0,5 : 1
c7:    A : B = 1 : 1
c8:    A : B = 2 : 1
c9:    A : B = 4 : 1
c10:   A : B = 1,5 : 1
c11:   A : B = 0,8 : 1
(Vorstehend bedeutet EO jeweils Ethylenoxid und PO jeweils Propylenoxid.)

Die in den Schaumprüfungen mit den vorstehend angegebenen Antischaummitteln (c1 bis c11) ermittelten Ergebnisse hinsichtlich Schauminhibierung ("Laufzeit Pumpe") und Schaumzerfall ("Restschaumhöhe") sind in den nachstehenden Tabellen I und II wiedergegeben. Tabelle I zeigt die mit dem Testlack al, Tabelle II die mit dem Textlack a2 gefundenen Werte.

Die Resultate der Schaumprüfungen zeigen, daß mit Hilfe der erfindungsgemäßen Antischaummittel insbesondere eine wesentlich bessere Schauminhibierung als bei den Vergleichsversuchen resultiert. Dies wirkt sich in der Praxis zudem insofern positiv aus, als ein besser schauminhibierendes Mittel auch eine geringere Dosierung desselben erforderlich macht. Auch hinsichtlich des Schaumzerfalls sind die erfindungsgemäßen Antischaummittel denjenigen der Vergleichsversuche in manchen Fällen überlegen.

Tabelle I

Testlack a1 + Koagulierungsmittel b + Antischaummittel

| Antischaum-mittel | Laufzeit Pumpe (min) | Zeit nach Abschalten der Pumpe (min) | Restschaumhöhe (ml) |
|---|---|---|---|
| c1 | 0,75 | 0,5 | 600 |
|  |  | 1 | 380 |
|  |  | 2 | 260 |
|  |  | 5 | 100 |
| c2 | 10,08 | 0,5 | 580 |
|  |  | 1 | 400 |
|  |  | 2 | 320 |
|  |  | 5 | 240 |
| c3 | 3,17 | 0,5 | 440 |
|  |  | 1 | 300 |
|  |  | 2 | 300 |
|  |  | 5 | 100 |
| c4 | 8,42 | 0,5 | 700 |
|  |  | 1 | 700 |
|  |  | 2 | 300 |
|  |  | 5 | 80 |
| c5 | 12,08 | 0,5 | 600 |
|  |  | 1 | 360 |
|  |  | 2 | 300 |
|  |  | 5 | 220 |

Tabelle I, Fortsetzung

| Antischaum-mittel | Laufzeit Pumpe (min) | Zeit nach Abschalten der Pumpe (min) | Restschaumhöhe (ml) |
|---|---|---|---|
| c6 | 12,75 | 0,5 | 260 |
| | | 1 | 220 |
| | | 2 | 180 |
| | | 5 | 100 |
| c7 | 21,75 | 0,5 | 340 |
| | | 1 | 200 |
| | | 2 | 160 |
| | | 5 | 0 |
| c8 | 18,17 | 0,5 | 240 |
| | | 1 | 200 |
| | | 2 | 160 |
| | | 5 | 0 |
| c9 | 13,33 | 0,5 | 420 |
| | | 1 | 300 |
| | | 2 | 240 |
| | | 5 | 160 |
| c10 | 19,75 | 0,5 | 340 |
| | | 1 | 240 |
| | | 2 | 120 |
| | | 5 | 0 |
| c11 | 18,75 | 0,5 | 320 |
| | | 1 | 220 |
| | | 2 | 140 |
| | | 5 | 0 |

7

Tabelle II

Testlack a2 + Koagulierungsmittel b + Antischaummittel

| Antischaum- mittel | Laufzeit Pumpe (min) | Zeit nach Abschalten der Pumpe (min) | Restschaumhöhe (ml) |
|---|---|---|---|
| c1 | 0,23 | 0,5 | 360 |
| | | 1 | 260 |
| | | 2 | 80 |
| | | 5 | 0 |
| c2 | 6,42 | 0,5 | 340 |
| | | 1 | 240 |
| | | 2 | 140 |
| | | 5 | 80 |
| c3 | 2,67 | 0,5 | 700 |
| | | 1 | 700 |
| | | 2 | 700 |
| | | 5 | 200 |
| c4 | 4,33 | 0,5 | 260 |
| | | 1 | 200 |
| | | 2 | 140 |
| | | 5 | 60 |

Tabelle II, Fortsetzung

| Antischaum-mittel | Laufzeit Pumpe (min) | Zeit nach Abschalten der Pumpe (min) | Restschaumhöhe (ml) |
|---|---|---|---|
| c5 | 10,33 | 0,5 | 400 |
|    |       | 1   | 320 |
|    |       | 2   | 240 |
|    |       | 5   | 60  |
| c6 | 8,17  | 0,5 | 420 |
|    |       | 1   | 380 |
|    |       | 2   | 200 |
|    |       | 5   | 60  |
| c7 | 13,33 | 0,5 | 330 |
|    |       | 1   | 220 |
|    |       | 2   | 0   |
|    |       | 5   | 0   |
| c8 | 11,17 | 0,5 | 400 |
|    |       | 1   | 280 |
|    |       | 2   | 180 |
|    |       | 5   | 60  |
| c9 | 10,67 | 0,5 | 360 |
|    |       | 1   | 260 |
|    |       | 2   | 180 |
|    |       | 5   | 60  |

Tabelle II, Fortsetzung

| Antischaum-mittel | Laufzeit Pumpe (min) | Zeit nach Abschalten der Pumpe (min) | Restschaumhöhe (ml) |
|---|---|---|---|
| c10 | 8,75 | 0,5 | 380 |
|  |  | 1 | 280 |
|  |  | 2 | 200 |
|  |  | 5 | 60 |
| c11 | 10,33 | 0,5 | 340 |
|  |  | 1 | 260 |
|  |  | 2 | 100 |
|  |  | 5 | 0 |

**Patentansprüche**

1. Antischaummittel, enthaltend
   A 33 bis 89 Gew.-%
   eines oder mehrerer Fettsäurealkylenoxidaddukte der allgemeinen Formel (I)
   $$R^1\text{-COO(A)}_n\text{-H} \qquad (I)$$
   wobei
   $R^1$ eine lineare oder verzweigte Alkylgruppe oder Alkenylgruppe mit 15 bis 21 C-Atomen ist,
   $A = (CH_2\text{-}CH_2O)$ oder $(CH(CH_3)CH_2O)$ und/oder $(CH_2CH(CH_3)O)$ ist und
   n eine Zahl von 1 bis 5 ist,
   und
   B 67 bis 11 Gew.-%
   eines Blockpolymeren des Propylenoxids und Ethylenoxids, welches folgende physikalische Kenndaten aufweist:
   - Trübungspunkt (10 %ige wäßrige Lösung): 9 °C bis 13 °C
   - HLB-Wert: 1,0
   - durchschnittliches Molekulargewicht: 3 800 g/mol
   - Viskosität (nach Brookfield; 25 °C): 800 mPas.

2. Antischaummittel nach Anspruch 1, dadurch gekennzeichnet, daß dieses aus 60 Gew.-% bis 80 Gew.-% der Komponente A und 40 Gew.-% bis 20 Gew.-% der Komponente B enthält.

3. Antischaummittel nach Anspruch 1, dadurch gekennzeichnet, daß dieses 44 bis weniger als 60 Gew.-% der Komponente A und 56 bis mehr als 40 Gew.-% der Komponente B enthält.

4. Antischaummittel nach Ansprüchen 1 bis 3, dadurch gekennzeichnet, daß die Komponente A ein Addukt

10

von Ölsäure mit 0,5 bis 2 mol, insbesondere mit 1 mol, Propylenoxid ist.

5. Antischaummittel nach Ansprüchen 1 bis 4, dadurch gekennzeichnet, daß dieses übliche Hilfs- und/oder Zusatzstoffe, insbesondere zusätzliche schaumzerstörende Stoffe und/oder Emulgatoren, enthält.

6. Verwendung von Antischaummitteln nach Ansprüchen 1 bis 5 in der lackverarbeitenden Industrie, insbesondere bei der Lackierung von Kraftfahrzeugen, zur Schauminhibierung im Umlaufwasser von Naßabscheidern für Spritzlackieranlagen.

7. Verwendung nach Anspruch 6, dadurch gekennzeichnet, daß man das Antischaummittel dem Umlaufwasser in Naßabscheidern von Spritzlackiersystemen bei kontinuierlicher Dosierung in Mengen von 1 bis 20 ml pro m³ Badvolumen und Stunde Betriebszeit und bei diskontinuierlicher Dosierung von 5 bis 50 ml pro m³ Badvolumen und Stunde Betriebszeit zufügt.

## Claims

1. A foam inhibitor containing

    A 33 to 89% by weight of one or more fatty acid alkylene oxide adducts corresponding to general formula (I)

    $$R^1\text{-}COO(A)_n\text{-}H \qquad (I)$$

    in which
    $R^1$ is a linear or branched alkyl group or alkenyl group containing 15 to 21 carbon atoms,
    $A = (CH_2\text{-}CH_2O)$ or $(CH(CH_3)CH_2O)$ and/or $(CH_2CH(CH_3)O)$ and
    n is a number of 1 to 5,

    and

    B 67 to 11% by weight of a block polymer of propylene oxide and ethylene oxide which has the following physical characteristics:
    - cloud point (10% aqueous solution): 9°C to 13°C
    - HLB value: 1.0
    - average molecular weight: 3,800 g/mol
    - viscosity (Brookfield/25°C): 800 mPas.

2. A foam inhibitor as claimed in claim 1, characterized in that it contains 60% by weight to 80% by weight component A and 40% by weight to 20% by weight component B.

3. A foam inhibitor as claimed in claim 1, characterized in that it contains 44 to less than 60% by weight component A and 56 to more than 40% by weight component B.

4. A foam inhibitor as claimed in claims 1 to 3, characterized in that component A is an adduct of oleic acid with 0.5 to 2 mol and, more particularly, with 1 mol propylene oxide.

5. A foam inhibitor as claimed in claims 1 to 4, characterized in that it contains standard auxiliaries and/or additives, more particularly additional foam-destroying agents and/or emulsifiers.

6. The use of the foam inhibitors claimed in claims 1 to 5 in the lacquer-processing industry, more particularly in the painting of motor vehicles, for inhibiting foaming in the circulation water of wet collectors for spray painting plants.

7. The use claimed in claim 6, characterized in that the foam inhibitor is added to the circulation water in wet collectors of spray painting plants in quantities of 1 to 20 ml per m³ bath volume per hour operating time in the case continuous operation and in quantities of 5 to 50 ml per m³ bath volume per hour operating time in the case of discontinuous operation.

## Revendications

1. Destructeur de mousse, contenant :
    A : 33 à 89 % en poids

d'un ou de plusieurs produits d'addition de formule générale :

$$R^1\text{-COO(A)}_n\text{-H} \qquad \text{(I)}$$

dans laquelle :

    $R^1$ est un groupe alkyl linéaire ou ramifié ou un groupe alcényle avec de 15 à 21 atomes de C,

    A est = $(CH_2\text{-}CH_2O)$ ou $[CH(CH_3)CH_2O]$ et/ou $[CH_2CH(CH_3)O]$ et/ou,

    n est un nombre de 1 à 5,

et,

B : 67 à 11 % en poids,

    d'un polymère en masse de l'oxyde de propylène et de l'oxyde d'éthylène, qui a - les caractéristiques physiques suivantes :

- Point de trouble (solution aqueuse à 10 %) : 9°C à 13°C
- Valeur HLB : 1,0,
- Poids moléculaire moyen : 3800 g/mol,
- Viscosité (selon Brookfield, 25°C) : 800 mPa.s.

**2.** Destructeur de mousse selon la revendication 1, caractérisé :
- en ce qu'il contient de 60 % en poids à 80 % en poids du composant A et de 40 % en poids à 20 % en poids du composant B.

**3.** Destructeur de mousse selon la revendication 1, caractérisé :
- en ce qu'il contient de 44 % à moins de 60 % en poids du composant A et de 56 % à plus de 40 % en poids du composant B.

**4.** Destructeur de mousse selon les revendications 1 à 3, caractérisé:
- en ce que le composant A est un produit d'addition de l'acide oléique avec, 0,5 à 2 mols, en particulier avec 1 mol d'oxyde de propylène.

**5.** Destructeur de mousse selon les revendications 1 à 4, caractérisé :
- en ce qu'il contient des adjuvants usuels et/ou des produits d'addition, en particulier des matières additionnelles détruisant la mousse et/ou des émulsionnants.

**6.** Utilisation de destructeurs de mousse selon les revendications 1 à 5, dans l'industrie de traitement de laques, en particulier pour le laquage des véhicules automobiles, destinée à l'inhibition de la mousse dans l'eau de circulation de séparateurs d'eau pour des installations de peinture au pistolet.

**7.** Utilisation selon la revendication 6, caractérisée :
- en ce qu'on ajoute le destructeur de mousse à l'eau de circulation dans des séparateurs d'eau de systèmes de peinture au pistolet en cas de dosage continu en quantités de 1 à 20 ml par m³ de volume de bain et heure de marche et en cas de dosage discontinu en quantités de 5 à 50 ml par m³ de volume de bain et heure de marche.